# EUROPEAN PATENT SPECIFICATION

(11) **EP 0 702 634 B1**
(45) Date of publication and mention of the grant of the patent: **02.04.1997**
(21) Application number: 94915568.3
(22) Date of filing: 02.05.1994
(51) Int. Cl.: B60K 37/06, F16H 59/02, B60R 16/00

(54) **COMPACT CONTROL UNIT FOR MOTOR VEHICLES, PARTICULARLY TRUCKS**
KOMPAKTE STEUEREINHEIT FÜR KRAFTFAHRZEUGE, INSBESONDERE LASTKRAFTWAGEN
ORGANE DE COMMANDE COMPACT POUR VEHICULES A MOTEURS, EN PARTICULIER DES CAMIONS

(30) Priority: 06.05.1993 IT BO930202
(43) Date of publication of application: 27.03.1996
(73) Proprietor: IANNICE, Armando, I-40043 Marzabotto (IT)
(72) Inventor: IANNICE, Armando, I-40043 Marzabotto (IT)
(74) Representative: Modiano, Guido, Dr.-Ing.
(86) International application number: EP9401385
(87) International publication number: WO9426549

(56) References cited:
- DE-A- 3 901 649
- DE-A- 4 128 306
- FR-A- 2 071 184
- US-A- 4 554 751

## Description

The present invention relates to a compact control unit for motor vehicles, particularly trucks.

It is known that in motor vehicles the controls for the various functions, such as the switches for lights, windshield wipers, turn indicators, power windows and the like, are distributed in various positions on the steering column or on the dashboard or anyway in the vicinity of the driver's seat.

Actuation of these accessory driving functions can therefore be awkward, particularly in difficult driving conditions, for example on curves or on rough or winding roads. It is in fact necessary to move one hand from the driving position and sometimes imbalance one's body.

This makes driving unsafe and in any case tiring due to the greater attention required; furthermore, it is necessary to check any swerving of the vehicle.

FR-A-2071184 describes a tubular element, equipped with various pushbuttons and switches for controlling various functional elements of the vehicle, which has to be inserted over the grip knob of the gearshift lever, so as to permit to the driver to control the actuation of those elements without be distracted from driving.

An aim of the present invention is to solve the above described problem by providing a compact control unit for motor vehicles, particularly trucks, that allows greater safety in driving and a more straightforward control of the vehicle.

Within the scope of this aim, an object of the present invention is to provide a compact control unit for motor vehicles which is simple in concept, safely reliable in operation and versatile in use.

With this aim and this object in view, there is provided, according to the invention, a compact control unit for motor vehicles, particularly trucks, with the characterizing features of claim 1.

The details of the compact control unit for motor vehicles, particularly trucks, according to the invention, will become apparent from the following detailed description of a preferred embodiment thereof, illustrated only by way of non-limitative example in the accompanying drawings, wherein:

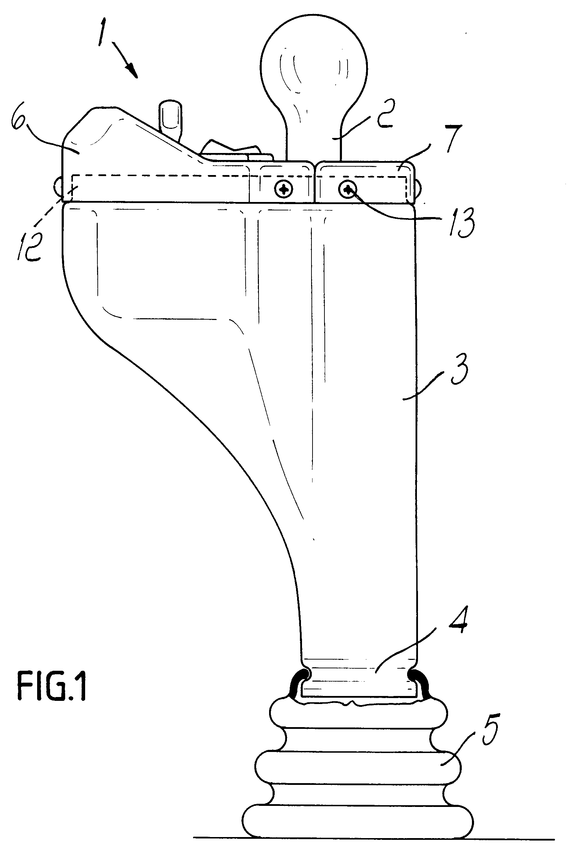

figure 1 is a side view of the compact control unit for motor vehicles according to the invention;
figure 2 is a top view thereof;
figure 3 is a corresponding top view of a different embodiment of the control unit.

With particular reference to the above figures, the reference numeral 1 generally designates the compact control unit, which is mounted on the gearshift lever 2 of the motor vehicle, particularly a truck.

The control unit 1 includes a tubular case 3 which is mounted on said gearshift lever 2 so as to allow the grip knob thereof to protrude upward. The case 3 tapers downward and has, in a downward region, a groove 4 for the coupling of a conventional elastic bellows 5 for covering the base of the gearshift 2.

In its upward region, the case 3 is closed by a cover formed by two complementary portions 6 and 7, hereinafter termed front and rear portions with reference to the advancement direction of the vehicle, which surround and secure the gearshift lever 2; the two portions of the cover in fact have a continuous perimetric edge which forms, at the mutual joining plane, respective semicircular recesses for coupling to the gearshift lever 2.

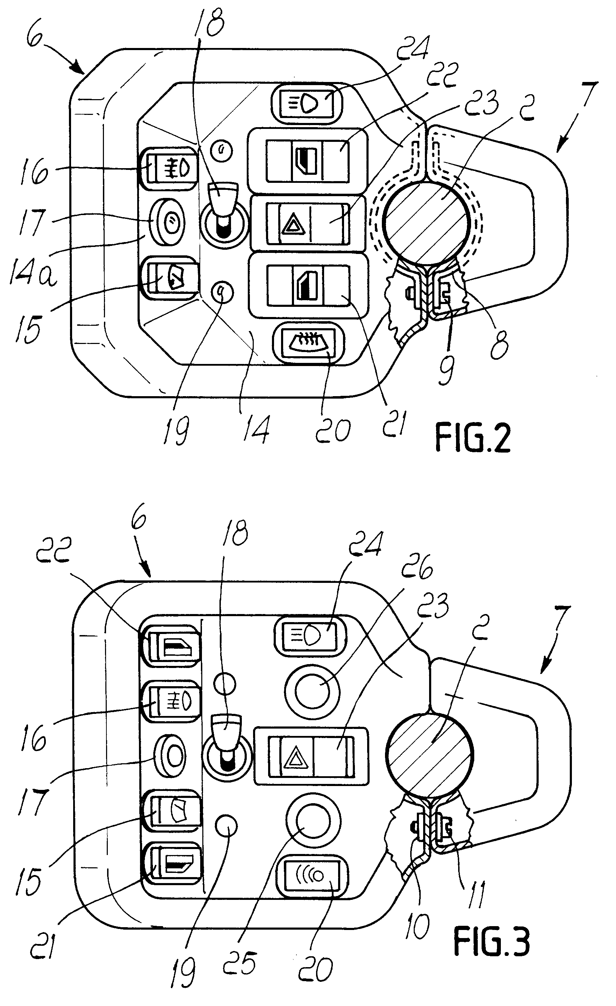

The covers 6 and 7 are coupled by means of respective metal elements 8 which cooperate so as to form a sort of collar that follows the contour of the edge of said lids at the joining plane. The half-collars 8 are secured by means of two screws 9 arranged symmetrically on the sides of the gearshift lever 2; the screws 9 are inserted through a hole of one of said half-collars 8 and screwed in a corresponding hole of the opposite half-collar (figure 2).

In another embodiment, the covers 6 and 7 are coupled, at said edge, by two fork-like elements 10 which are arranged symmetrically at the sides of the gearshift lever 2 (figure 3). The forks 10 fit from below over the coupled edges of the covers 6 and 7, which are then secured by means of screws 11 which are inserted through a hole in one of the tines of said forks and screwed in a corresponding hole of the opposite tine.

The coupled covers 6 and 7 are then associated with the case 3 and fit, by means of said edge, on a complementarily shaped upper edge 12 of said case. The covers 6 and 7 are fixed to the case 3 by means of screws 13 passing through said edges.

The front cover 6 forms a base 14 on which the controls and indicator elements of several functions are grouped and appropriately distributed; preferably, the base 14 has at least one front flap 14a which is tilted so as to offer better access. Of course it is possible to arrange some of said controls in the rear cover 7 as well.

In particular, as shown in figure 2, the windshield wiper switch 15 and the high-beam headlight switch 16 are arranged on the front flap 14a of the cover 6, together with an associated indicator light 17. The turn indicator lever 18 is arranged at the center of the base 14 in an intermediate position between associated indicator lights 19. Finally, the horn sounding button 20, the power window actuation buttons 21 and 22 which are symmetrical to the emergency light 23, and the high-beam headlight flashing button 24 are arranged in this order proximate to the gearshift lever 2.

Conveniently, said controls have a built-in night lighting system that is turned on when the vehicle lights are switched on.

Figure 3 illustrates a different embodiment of the control unit, wherein said controls, designated by the same reference numerals for greater clarity, are arranged differently. In particular, the power window buttons 21 and 22 are arranged on the front flap and are symmetrical to the windshield wiper switch 15, to the indicator light 17 and to the high-beam headlight switch 16. The turn indicator lever 18 is arranged at the center of the base 14 together with the associated indicator lights 19. Finally, the buttons 26 for locking the differential or for the rear fog lamp and of the engine brake are arranged proximate to the gearshift lever 2 in addition to the horn sounding button 20, to the emergency light button 23, and to the flashing high-beam headlight button 24. The engine brake function is present in larger trucks.

Naturally it is possible to provide for the presence of controls other than those described above, for example the microphone button of radio transceiver equipment.

Said controls and indicator elements are placed parallel with those normally present on the vehicle, so that their use does not rule out use of the conventional controls.

To conclude, the described control unit allows to group, in a compact manner and at the gearshift lever, the various accessory driving functions that are usually arranged in different positions on the steering column of the vehicle and on the dashboard. This allows to activate these functions without taking one's hand off the gearshift lever, while the other hand holds the steering wheel. It is possible for example to flash one's headlights or sound one's horn even while changing gears or, if necessary, to operate the windshield wiper.

Furthermore, in the case of trucks provided with an engine brake, it is possible to provide an earlier braking action, since by down-shifting it is also possible to reduce the rotation rate of the engine.

In this manner one obtains far more relaxed and safer driving even on difficult roads as well as straightforward control of the vehicle.

In the practical embodiment of the invention, the materials employed, as well as the shapes and dimensions, may be any according to the requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. Compact control unit (1) for motor vehicles, particularly trucks, comprised of a tubular case (3), said tubular case is mountable so as to surround the gearshift lever (2) of said motor vehicle, characterized in that the knob of said gearshift lever protrudes through a cover member that closes the top of said tubular case (3) and that defines a base on which controls (15, 16, 18, 20, 21, 22, 24) and indicator elements (17, 19, 23) of several accessory driving functions are grouped and appropriately distributed.

2. Control unit according to claim 1, characterized in that said cover is formed by a pair of complementary portions (6, 7) which surround said gearshift lever (2) and secure said control unit thereto, said cover portions (6, 7) having a continuous perimetric edge which forms, at the mutual joining plane, respective semicircular recesses for coupling to said gearshift lever.

3. Control unit according to claim 2, characterized in that said cover portions (6, 7) are coupled by means of respective metal elements (8) which cooperate so as to form a sort of collar that follows the contour of said edge of said portions at said joining plane, said half-collars being secured by virtue of screw means (9) arranged symmetrically at the sides of said gearshift lever.

4. Control unit according to claim 2, characterized in that said portions of the cover (6, 7) are coupled, at said edge, by a pair of fork-like elements (10) arranged symmetrically at the sides of said gearshift lever (2) and secured by associated screw means (11).

5. Control unit according to claim 1, characterized in that at least the switches of the windshield wiper (15) and of the high-beam headlights (16), the turn indicator lever (18), the buttons for activating the horn (20), the power windows (21, 22) and the emergency light (23), as well as associated indicator lights (19), are arranged on said cover.

6. Control unit according to claim 1, characterized in that an engine brake button (26) is arranged on said cover.

7. Control unit according to claim 1, characterized in that said tubular case (3) tapers downward and is provided, in a downward region, with a groove (4) for the coupling of an elastic bellows (5) for covering the base of said gearshift lever (2), said case (3) having, in an upward region, a perimetric edge on which said cover fits and is fixed.

8. Control unit according to claim 1, characterized in that said controls include night-time lighting.

## Patentansprüche

1. Kompakte Steuereinheit (1) für Kraftfahrzeuge, insbesondere Lastwagen, mit einem rohrförmigen Gehäuse (3), wobei das rohrförmige Gehäuse so anbringbar ist, daß es den Getriebeschalthebel (2) des Kraftfahrzeugs umgibt, dadurch gekennzeichnet, daß der Knauf des Getriebeschalthebels durch eine Abdeckung hervorsteht, welche die obere Seite des rohrförmigen Gehäuses (3) verschließt und eine Grundplatte bildet, auf der Steuerelemente (15, 16, 18, 20, 21, 22, 24) und Anzeigeelemente (17, 19, 23) für verschiedene Hilfsantriebsfunktionen gruppiert und geeignet verteilt sind.

2. Steuereinheit nach Anspruch 1, dadurch gekennzeichnet, daß die Abdeckung durch ein Paar von komplementären Abschnitten (6, 7) gebildet ist, welche den Getriebeschalthebei (2) umgeben und die Steuereinheit an diesem befestigen, wobei die Abdeckungsabschnitte (6, 7) einen kontinuierlichen Umfangsrand aufweisen, der in der Ebene der gegenseitigen Berührung entsprechende halbkreisförmige Aussparungen für die Ankopplung an den Getriebeschalthebel bildet.

3. Steuereinheit nach Anspruch 2, dadurch gekennzeichnet, daß die Abdeckungsabschnitte (6, 7) mittels entsprechender Metallelemente (8) miteinander verbunden sind, die derart zusammenwirken, daß sie eine Art Bund bilden, welcher der Kontur des Randes der Abschnitte in der Berührungsebene nachfolgt, wobei die Halb-Bünde durch Schraubenmittel (9) befestigt sind, die symmetrisch an den Seiten des Getriebeschalthebels angeordnet sind.

4. Steuereinheit nach Anspruch 2, dadurch gekennzeichnet, daß die Abschnitte (6, 7) der Abdeckung an dem Rand mittels gabelartiger Elemente (10) verbunden sind, die symmetrisch an den Seiten des Getriebschalthebels (2) angeordnet und mittels zugeordneter Schraubenmittel (11) befestigt sind.

5. Steuereinheit nach Anspruch 1, dadurch gekennzeichnet, daß Wenigstens der Scheibenwischerschalter (15), der Fernlichtscheinwerfer-Schalter (16), der Blinkerhebel (18), der Signalhorn-Betätigungsknopf (20), die Betätigungsknöpfe (21, 22) der elektrischen Fensterheber und der Warnblinkanlagen-Betätigungsknopf (23) sowie zugehörige Anzeigelampen (19) an der Abdeckung angeordnet sind.

6. Steuereinheit nach Anspruch 1, dadurch gekennzeichnet, daß an der Abdeckung ein Motorbremsknopf (26) angeordnet ist.

7. Steuereinheit nach Anspruch 1, dadurch gekennzeichnet, daR sich das rohrförmige Gehäuse (3) nach unten verjüngt und in einem unteren Abschnitt mit einer Nut (4) für die Anbringung eines elastischen Balgs (5) zur Abdeckung des Basisbereichs des Getriebeschalthebels (2) versehen ist, wobei das Gehäuse (3) in einem oberen Bereich einen Umfangsrand aufweist, auf den die Abdeckung paßt und an welchem sie befestigt ist.

8. Steuereinheit nach Anspruch 1, dadurch gekennzeichnet, daß die Steuerelemente eine Nachtbeleuchtung aufweisen.

## Revendications

1. Unité de commande compacte (1) pour véhicules à moteur, particulièrement des camions, comprenant un boîtier tubulaire (3), ledit boîtier tubulaire étant apte à être monté de façon à entourer le levier de changement de vitesses (2) dudit véhicule à moteur,
caractérisée en ce que le pommeau dudit levier de changement de vitesses fait saillie à travers un couvercle qui ferme le dessus dudit boîtier tubulaire (3) et qui définit une base sur laquelle des commandes (15,16,18,20,21,22,24) et des éléments indicateurs (17,19,23) de plusieurs fonctions de commande d'accessoires sont groupés et répartis de façon appropriée.

2. Unité de commande selon la revendication 1,
caractérisée en ce que ledit couvercle est formé par une paire de parties complémentaires (6,7) qui entourent ledit levier de changement de vitesses (2) et immobilisent ladite unité de commande à celui-ci, lesdites parties de couvercle (6,7) présentant un bord périphérique continu qui forme, au plan de joint mutuel, des évidements semi-circulaires respectifs pour le couplage audit levier de changement de vitesses.

3. Unité de commande selon la revendication 2,
caractérisée en ce que lesdites parties de couvercle (6,7) sont couplées par l'intermédiaire d'éléments métalliques respectifs (8) qui coopèrent, de façon à former une sorte de collier qui suit le contour dudit bord desdites parties audit plan de Joint, lesdits demi-colliers étant fixés par des moyens de vissage (9) agencés symétriquement sur les côtés dudit levier du changement de vitesses.

4. Unité de commande selon la revendication 2,
caractérisée en ce que lesdites parties du couvercle (6,7) sont couplées, audit bord, par une paire d'éléments (10) en forme de chape agencés symétriquement sur les côtés dudit levier de changement de vitesses (2) et fixés par des moyens de vissage associés (11).

5. Unité de commande selon la revendication 1,
caractérisée en ce qu'au moins des commutateurs des essuie-glaces du pare-brise (15) et des phares à longue portée (16), du levier des clignotants (18), des boutons pour actionner l'avertisseur sonore (20), les glaces électriques (21,22) et les feux de détresse (23), ainsi que les voyants lumineux associés (19), sont agencés sur ledit couvercle.

6. Unité de commande selon la revendication 1,
caractérisée en ce qu'un bouton de frein moteur (26) est agencé sur ledit couvercle.

7. Unité de commande selon la revendication 1,
caractérisée en ce que ledit boîtier tubulaire (3) va en diminuant vers le bas et est pourvu, en région basse, d'une gorge (4) pour le couplage d'un soufflet élastique (5) pour couvrir la base dudit levier de changement de vitesses (2), ledit boîtier (3) présentant, en région haute, un bord périphérique sur lequel ledit boîtier s'adapte et est fixé.

8. Unité de commande selon la revendication 1,
caractérisée en ce que lesdites commandes incluent un éclairage nocturne.
